# FASCICULE DE BREVET EUROPEEN

(11) **EP 3 552 324 B1**
(45) Date de publication et mention de la délivrance du brevet: **24.02.2021**
(21) Numéro de dépôt: 17821686.7
(22) Date de dépôt: 06.12.2017
(51) Int. Cl.: H04B 10/2581, H04B 10/275

(54) **RÉSEAU DE COMMUNICATION EMBARQUÉ OPTIQUE EN ANNEAU POUR AÉRONEF**
EINGEBETTETES OPTISCHES RINGKOMMUNIKATIONSNETZWERK FÜR FLUGZEUG
EMBEDDED OPTICAL RING COMMUNICATION NETWORK FOR AIRCRAFT

(30) Priorité: 09.12.2016 FR 1662226
(43) Date de publication de la demande: 16.10.2019
(73) Titulaire: Safran Electrical & Power, 31702 Blagnac Cedex (FR)
(72) Inventeur: GARCIA, Jean-Pierre, 31702 Blagnac Cedex (FR); LE GALL, Sébastien, 31702 Blagnac Cedex (FR)
(74) Mandataire: Gevers & Orès
(86) Numéro de dépôt international: PCT/FR2017/053419
(87) Numéro de publication internationale: WO 2018/104665

(56) Documents cités:
- US-A- 4 366 565
- US-A1- 2013 294 776

## Description

### 1. Domaine technique de l'invention

L'invention concerne un réseau optique embarqué de type réseau en anneau. En particulier, l'invention concerne un réseau de communication optique pouvant être embarqué dans un aéronef afin de permettre la communication d'équipements de l'aéronef entre eux.

### 2. Arrière-plan technologique

L'état de la technique comprend notamment les documents US-A-4 366 565 et US-A1-2013/294776.

Afin de relier des équipements d'un aéronef entre eux à des fins de communication, les aéronefs sont équipés de différents câblages formant un réseau dont l'installation et la maintenance peuvent être complexes. En outre, ce câblage présente un coût important, d'une part en termes de prix des câbles mais aussi en termes de poids entraînant une hausse de la consommation de carburant durant le vol.

De plus, les réseaux actuels utilisent généralement des câbles en cuivre formant un mélange de réseau en étoile et en anneau, de type « Switched Ethernet » AFDX. Les câbles utilisent un support en cuivre de deux paires torsadées et redondées.

Ce type de réseau à câbles en cuivre possède plusieurs inconvénients : les câbles métalliques posent des problématiques de perturbations électromagnétiques (compatibilité électromagnétique, induction de courant, etc.), le réseau est peu adaptable aux modifications (ajout de nouvel équipement par exemple), le réseau a un débit limité à quelques dizaines de Mb/sec (essentiellement dû à l'aspect déterministe du protocole TCP), et le poids des câbles est élevé (environ 32kg/km, un avion pouvant comprendre par exemple plusieurs centaines de kilomètre de câbles). À tous ces inconvénients s'ajoute en outre un coût élevé de maintenance et de modification.

Une solution proposée à au moins une partie de ces inconvénients a été de remplacer les câbles en cuivre par des fibres optiques. Toutefois, le réseau obtenu r ne permet pas une grande adaptabilité.

### 3. Objectifs de l'invention

L'invention vise à pallier au moins certains des inconvénients des réseaux de communication connus.

En particulier, l'invention vise à fournir, dans au moins un mode de réalisation de l'invention, un réseau de communication permettant d'améliorer les communications entre des équipements d'un aéronef.

L'invention vise aussi à fournir, dans au moins un mode de réalisation, un réseau de communication permettant une augmentation du débit des échanges de données.

L'invention vise aussi à fournir, dans au moins un mode de réalisation de l'invention, un réseau de communication permettant la connexion ou la déconnexion facile d'équipements.

L'invention vise aussi à fournir, dans au moins un mode de réalisation de l'invention, un réseau de communication offrant une meilleure sécurité des transmissions de données.

L'invention vise aussi à fournir, dans au moins un mode de réalisation de l'invention, un réseau de communication permettant une redondance en cas de dégradation d'une partie du réseau.

### 4. Exposé de l'invention

Pour ce faire, l'invention concerne un réseau de communication optique embarqué en anneau adapté pour permettre une transmission de données entre des équipements, comprenant :
- un ensemble de boîtiers de dérivation reliés chacun d'une part directement à deux autres boîtiers de dérivation par des fibres optiques multimodes et bidirectionnelles de façon à former un anneau, et adaptés pour être reliés d'autre part à au moins un multiplexeur/démultiplexeur par des fibres optiques multimodes et bidirectionnelles,
- chaque fibre optique est adaptée pour permettre le transport de signaux optiques d'au moins trois modes différents,
- chaque multiplexeur/démultiplexeur comprend une pluralité d'éléments optiques passifs et permet de transmettre au moins trois signaux d'équipements provenant des équipements via un multiplexage modal dans une fibre optique ou de séparer les modes d'un signal optique provenant de la fibre optique vers au moins trois signaux d'équipements,
caractérisé en ce que :
- les boîtiers de dérivation comprennent chacun trois séparateurs auxquels sont connectées les fibres optiques et chacun dirigés vers au moins un prisme, lesdits séparateurs et ledit prisme étant configurés pour diriger un signal optique provenant d'une fibre optique et entrant dans un séparateur vers les deux autres séparateurs et pour que chaque séparateur reçoive les signaux optiques provenant des deux autres séparateurs et envoie ces signaux à la fibre optique à laquelle il est connecté.

Un réseau de communication optique selon l'invention permet donc une communication entre différents équipements à un débit élevé (jusqu'à plusieurs dizaines de Gb/seconde sur plus d'une centaine de mètres): le multiplexage par modes de propagation permet de s'ajouter aux multiplexages utilisés couramment (notamment multiplexage en longueur d'onde et multiplexage temporel) afin d'augmenter le nombre d'équipements pouvant communiquer simultanément sur le réseau. En outre, le multiplexage par mode permet, par maîtrise d'injection et de propagation des modes des signaux optiques, de s'affranchir de la dispersion modale.

Les séparateurs et le prisme des boîtiers de dérivation sont des composants passifs, qui permettent de transmettre les signaux optiques sans perte des modes du signal optique transmis. Les séparateurs permettent de former, à partir d'un signal optique reçu et grâce à des éléments optiques passifs, deux signaux optiques identiques qui sont dirigés vers des parties différentes du prisme. Par réflexion ou réfraction, le prisme dirige un premier de ces deux signaux optiques vers un premier des autres séparateurs et un deuxième de ces deux signaux vers un deuxième séparateur. De même, par fonctionnement inverse, chaque séparateur reçoit deux signaux optiques provenant des deux autres séparateurs, permettant ainsi un fonctionnement bidirectionnel de la transmission entre chaque séparateur deux à deux.

Le fonctionnement passif des boîtiers de dérivation leur permet aussi de fonctionner sans la présence d'un multiplexeur/démultiplexeur connecté à un des séparateurs. Dans ce cas, le boîtier de dérivation se comporte comme une prise dans le réseau, transmettant les signaux optiques d'un boîtier de dérivation voisin vers le boîtier de dérivation suivant dans l'anneau, et disponible pour pouvoir raccorder de nouveaux équipements au réseau. Ainsi, les boitiers de dérivations peuvent être répartis dans l'infrastructure dans laquelle le réseau est déployé, par exemple un aéronef, en prévision de nouveaux équipements à ajouter dans le futur. De même, lorsque qu'un équipement ou un ensemble d'équipements doit être retiré du réseau, le multiplexeur/démultiplexeur associé peut être déconnecté du boîtier de dérivation, sans nécessiter de reconfiguration du réseau pour son bon fonctionnement.

Le multiplexage par mode permet aussi d'améliorer la sécurité de la transmission des données, car l'opération de séparation des modes (démultiplexage) peut être effectuée uniquement par les démultiplexeurs modaux: une interception de données au niveau de la fibre optique, par exemple en dénudant et courbant cette fibre optique, ne permettra pas d'obtenir un signal optique lisible.

En outre, du fait de la configuration du réseau en anneau et du fait que chaque fibre optique permette la transmission des signaux optiques dans les deux sens (fibre bidirectionnelle), le réseau optique présente une redondance permettant, en cas de défaillance du réseau, de permettre à tous les équipements de rester connectés.

Enfin, un réseau de communication selon l'invention permet de transmettre dans un même canal optique multiplexé des informations indépendantes et ségréguées selon leurs criticités ou leurs types de façon optique (ou modal), sans interférence d'une mode optique à un autre.

Avantageusement et selon l'invention, le prisme est un prisme droit ayant comme base un triangle équilatéral.

Selon cet aspect de l'invention, le séparateur dirige un premier signal optique vers une première face latérale (rectangulaire) du prisme. Par réflexion sur cette face, ce premier signal optique est dirigé vers un premier des autres séparateurs. De même, le séparateur dirige un deuxième signal optique vers une deuxième face latérale du prisme et par réflexion sur cette face, ce deuxième signal optique est dirigé vers un deuxième des autres séparateurs. Le prisme joue ainsi le rôle d'un miroir multifacettes. Les angles d'incidences et l'indice de réfraction du prisme sont configurés pour permettre ces réflexions.

Avantageusement et selon l'invention, les fibres optiques multimode ont un diamètre de cœur supérieur à 50 µm.

Selon cet aspect de l'invention, la fibre multimode a un diamètre de cœur suffisamment élevé pour permettre la propagation des signaux de modes différents dans la fibre.

Avantageusement et selon l'invention, les boîtiers de dérivation et les fibres optiques formant l'anneau sont disposés dans un même plan, et le réseau optique comprend un capteur permettant de mesurer le temps de propagation de deux signaux optiques dans l'anneau, les deux signaux optiques parcourant l'anneau dans un sens de propagation opposé.

Selon cet aspect de l'invention, le réseau optique en anneau permet de former un gyromètre à effet Sagnac, permettant la mesure de la vitesse angulaire d'un moyen de transport dans lequel le réseau optique est embarqué, selon le plan dans lequel s'étendent les boîtiers de dérivation et les fibres optiques formant l'anneau. Cet aspect de l'invention est particulièrement utile dans un aéronef, et selon la configuration de l'anneau, permet de mesurer la vitesse angulaire selon le plan dans lequel s'étend l'anneau (par exemple mesure du roulis, tangage ou lacet de l'aéronef).

L'invention concerne également un aéronef comprenant une pluralité d'équipements, caractérisé entre ce qu'il comprend un réseau optique selon l'invention pour la transmission de données entre lesdits équipements.

Les équipements de l'aéronef peuvent ainsi transmettre des données par le réseau optique y compris si ceux-ci émettent leurs signaux aux mêmes longueurs d'onde.

L'invention concerne également un réseau de communication optique et un aéronef caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un réseau de communication optique selon un mode de réalisation de l'invention,
- la figure 2 est une vue schématique d'un multiplexeur d'un réseau de communication optique selon un mode de réalisation de l'invention,
- la figure 3 est une vue schématique de différents modes pouvant être transporté dans une même fibre optique multimode d'un réseau de communication optique selon un mode de réalisation de l'invention,
- la figure 4 est une vue schématique d'un boîtier de dérivation d'un réseau de communication optique selon un mode de réalisation de l'invention,

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

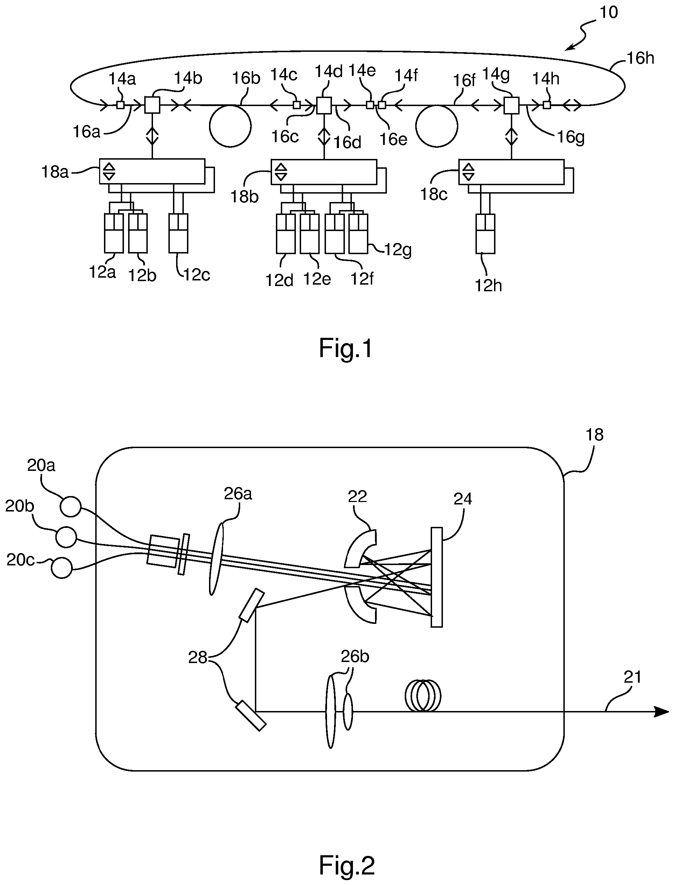

La figure 1 représente schématiquement un réseau 10 de communication optique en anneau selon un mode de réalisation de l'invention, embarqué par exemple dans un aéronef. Le réseau 10 optique est destiné à permettre une transmission de données informatiques entre des équipements 12a-12h. Pour ce faire, le réseau de communication comprend un ensemble de boîtiers 14a-14h de dérivation, reliés chacun directement à deux autres boîtiers de dérivation par des fibres 16a-16h optiques multimodes et bidirectionnelles de façon à former un anneau. Comme visible notamment par les boucles formées par les fibres 16e et 16h optiques permettant de représenter une grande longueur de fibre, la figure 1 n'est pas à l'échelle et les boîtiers de dérivation peuvent être plus éloignés les uns des autres et répartis différemment sur l'anneau.

Chaque boîtier de dérivation est en outre adapté pour être relié à un multiplexeur/démultiplexeur par une fibre optique multimode et bidirectionnelles. En configuration normale du réseau, chaque boîtier de dérivation peut être ou ne pas être relié à un multiplexeur/démultiplexeurs : les boîtiers de dérivation reliés à un multiplexeur/démultiplexeur, ici les boîtiers 14b, 14d, 14g de dérivation, permettent la connexion au réseau optique des équipements reliés au multiplexeur/démultiplexeur, et les boîtiers de dérivation non reliés à un multiplexeur/démultiplexeur permettent de proposer une prise de connexion en cas de nécessité d'ajout d'équipements au réseau via un multiplexeur/démultiplexeur. En pratique, les boîtiers de dérivation peuvent ainsi être répartis dans l'aéronef en prévision de nouveaux équipements à ajouter dans le futur.

Dans ce mode de réalisation, le boîtier 14b de dérivation est relié à un multiplexeur/démultiplexeur 18a permettant la connexion des équipements 12a, 12b, 12c au réseau, le boîtier 14d de dérivation est relié à un multiplexeur/démultiplexeur 18b permettant la connexion des équipements 12d, 12e, 12f, 12g au réseau, et le boîtier 14g de dérivation est relié à un multiplexeur/démultiplexeur 18c permettant la connexion de l'équipement 12h au réseau.

En mesurant la différence du temps de propagation dans l'anneau d'un signal optique se propageant dans les fibres 16a-16h optiques multimodes durant un tour complet de l'anneau dans un sens et dans le sens inverse, le réseau 10 optique peut permettre de mesurer la vitesse angulaire de l'aéronef dans le plan dans lequel s'étend l'anneau.

La figure 2 représente schématiquement un multiplexeur/démultiplexeur 18 d'un réseau optique selon un mode de réalisation de l'invention.

Le fonctionnement du multiplexeur/démultiplexeur 18 est expliqué ici dans son fonctionnement comme multiplexeur. La fonction démultiplexeur est analogue dans le sens inverse.

Le multiplexeur/démultiplexeur 18 reçoit des signaux optiques provenant des équipements et destiné à être transmis au réseau optique, ici trois signaux 20a, 20b, 20c d'équipements, pouvant avoir une fréquence égale ou différente. Si les équipements ne transmettent pas de signaux optiques mais des signaux par exemple électriques, le multiplexeur/démultiplexeur peut comprendre des moyens de conversion des signaux électriques en signaux optiques. Par le passage des trois signaux 20a, 20b, 20c d'équipements dans une pluralité d'éléments optiques passifs, les signaux d'équipements vont être combinés pour former un signal 21 optique unique dans lequel chaque signal d'équipement a été modulé de sorte à présenter un mode particulier de propagation. Le multiplexeur/démultiplexeur 18 effectue pour ce faire une succession de plusieurs transformées de Fourier optiques via les éléments optiques passifs, par exemple dans ce mode de réalisation un miroir 22 et un réseau 24 de phase, les signaux d'équipements effectuant plusieurs réflexions entre le réseau 24 de phase et le miroir 22 jusqu'à ségrégation par mode et combinaison. Les éléments optiques passifs comprennent aussi une lentille 26a de collimation et des lentilles 26b de focale, ainsi que des miroirs 28 de renvoi.

Comme expliqué précédemment, la fonction démultiplexeur fonctionne dans le sens inverse, c'est-à-dire qu'un signal optique unique entre dans le multiplexeur/démultiplexeur 18 et est décomposé en plusieurs signaux de sortie transmis à chaque équipement, en utilisant les mêmes composants.

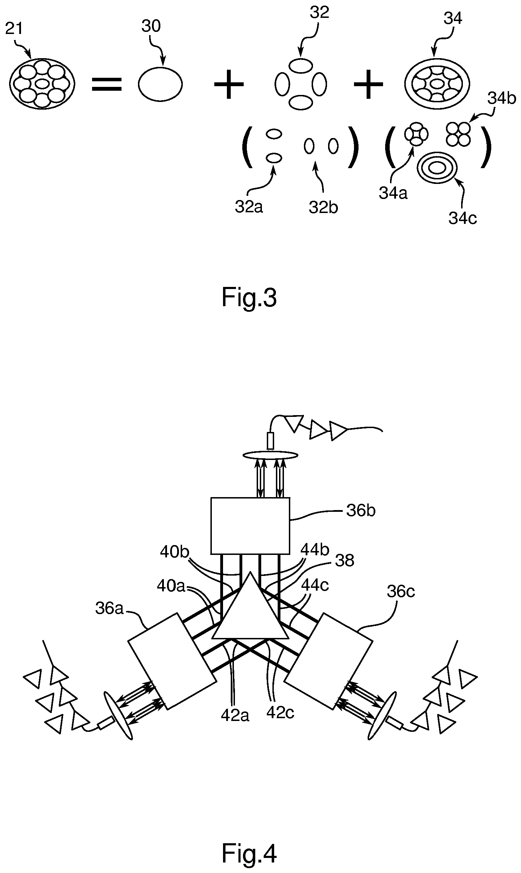

La ségrégation des signaux par mode à l'issu de ce multiplexage est décrite sur la figure 3.

La figure 3 représente schématiquement les différents modes pouvant être transportés dans une même fibre optique multimode d'un réseau de communication optique selon un mode de réalisation de l'invention.

La référence 21 représente la forme du signal optique tel que propagé dans une fibre optique multimode selon une coupe transversale de ladite fibre. Le signal 21 optique, par exemple lors de la combinaison des trois signaux 20a, 20b, 20c tel que décrit précédemment, peut être considéré comme la somme des trois modes utilisés pour la propagation de ces signaux d'équipements dans le signal optique unique. Dans ce mode de réalisation, le premier mode 30 est un mode de type TEM₀₀, le deuxième mode 32 est un mode de type TEM₀₁ (ou une combinaison de deux modes 32a et 32b de type TEM₀₁), le troisième mode 34 est un mode TEM₀₂ (ou une combinaison de trois modes 34a, 34b et 34c de type TEM₀₂). La référence 21 représente ainsi la somme des groupes de modes 30, 32 et 34, eux-mêmes composés des modes 30, 32a et 32b, 34a et 34b et 34c.

Le mode de réalisation de l'invention décrit est uniquement à titre indicatif comme solution pour combiner trois signaux d'équipements. Selon d'autres modes de réalisation, davantage de modes peuvent être utilisés pour permettre la combinaison de plus de trois signaux d'équipements, selon les besoins du réseau et le nombre d'équipements connectés. En outre, les types de modes utilisés peuvent être différents.

La figure 4 représente schématiquement un boîtier de dérivation d'un réseau de communication optique selon un mode de réalisation de l'invention.

Le boîtier de dérivation comprend trois séparateurs, un premier séparateur 36a, un deuxième séparateur 36b et un troisième séparateurs 36c, ainsi qu'un prisme 38 droit ayant comme base un triangle équilatéral. Chaque séparateur 36a, 36b, 36c est relié à une fibre optique multimode, et reçoit un signal optique provenant soit d'une autre boite de dérivation voisine dans l'anneau, soit d'un multiplexeur/démultiplexeur. Dans le mode de réalisation illustré, les séparateurs 36a, 36b reçoivent par exemple des signaux optiques provenant d'autres boîtiers de dérivation et le séparateur 36b peut recevoir un signal optique provenant d'un multiplexeur/démultiplexeur.

Les séparateurs permettent de diviser les signaux optiques pour les transmettre aux deux autres séparateurs, ainsi que de recevoir les signaux optiques provenant des deux autres séparateurs. Pour ce faire, le premier séparateur 36a divise par exemple le signal reçu en deux signaux optiques identiques, formant des faisceaux optiques, un premier faisceau 40a optique et un deuxième faisceau 42a optique. Le premier faisceau 40a optique est dirigé vers une face du prisme et est réfléchi vers le deuxième séparateur 36b. Le deuxième faisceau 42a optique est dirigé vers une face du prisme 38 et est réfléchi vers le troisième séparateur 36c.

À l'inverse, le premier séparateur reçoit un faisceau 40b optique provenant du deuxième séparateur 36b et réfléchi par le prisme 38 et un faisceau 42c optique provenant du troisième séparateur 36c et réfléchi par le prisme 38. Enfin, le deuxième séparateur 36b envoie un faisceau 44b optique vers le troisième séparateur 36c et reçoit un faisceau 44c optique du troisième séparateur 36c.

Dans le cas où le deuxième séparateur 36b ne serait pas connecté à un multiplexeur/démultiplexeur (le boîtier de dérivation est ainsi disponible pour connecter de nouveaux équipements), les séparateurs peuvent être configurés pour que le premier séparateur 36a et le troisième séparateur 36c envoient/reçoivent uniquement les faisceaux 42a et 42c optiques.

À la réception des faisceaux optiques provenant des autres séparateurs, chaque séparateur combine ces faisceaux optiques et transmet le signal optique obtenu vers la fibre optique à laquelle il est connecté.

L'invention ne se limite pas aux seuls modes de réalisation décrits. En particulier, d'autres types de réseaux optiques sont possibles. Par exemple, les configurations des éléments optiques passifs des multiplexeurs/démultiplexeurs ainsi que des boîtiers de dérivations peuvent être modifiés du moment que la fonction réalisée est identique et que seuls des éléments optiques passifs sont utilisés, car ils permettent la conservation des modes des signaux optiques.

## Revendications

1. Réseau de communication optique embarqué en anneau adapté pour permettre une transmission de données entre des équipements (12a-12h), comprenant :
- un ensemble de boîtiers (14a-14h) de dérivation reliés chacun d'une part directement à deux autres boîtiers (14a-14h) de dérivation par des fibres (16a-16h) optiques multimodes et bidirectionnelles de façon à former un anneau, et adaptés pour être reliés d'autre part à au moins un multiplexeur/démultiplexeur (18a, 18b, 18c) par des fibres optiques multimodes et bidirectionnelles,
- chaque fibre optique (16a-16h) est adaptée pour permettre le transport de signaux optiques d'au moins trois modes (32, 32, 34) différents,
- chaque multiplexeur/démultiplexeur (18a, 18b, 18c) comprend une pluralité d'éléments optiques passifs et permet de transmettre au moins trois signaux d'équipements provenant des équipements (12a-12h) via un multiplexage modal dans une fibre optique ou de séparer les modes d'un signal optique provenant de la fibre optique vers au moins trois signaux d'équipements,
**caractérisé en ce que** :
- les boîtiers (14a-14h) de dérivation comprennent chacun trois séparateurs (36a, 36b, 36c) auxquels sont connectées les fibres optiques et chacun dirigés vers au moins un prisme (38), lesdits séparateurs (36a, 36b, 36c) et ledit prisme (38) étant configurés pour diriger un signal optique provenant d'une fibre optique et entrant dans un séparateur vers les deux autres séparateurs et pour que chaque séparateur reçoive les signaux optiques provenant des deux autres séparateurs et envoie ces signaux à la fibre optique à laquelle il est connecté.

2. Réseau optique selon la revendication 1, **caractérisé en ce que** le prisme (38) est un prisme droit ayant comme base un triangle équilatéral.

3. Réseau optique selon l'une des revendications 1 ou 2, **caractérisé en ce que** les fibres (16a-16h) optiques multimode ont un diamètre de cœur supérieur à 50 µm.

4. Réseau optique selon l'une des revendications 1 à 3, **caractérisé en ce que** les boîtiers (14a-14h) de dérivation et les fibres (16a-16h) optiques formant l'anneau sont disposés dans un même plan, et **en ce que** le réseau optique comprend un capteur permettant de mesurer le temps de propagation de deux signaux optiques dans l'anneau, les deux signaux optiques parcourant l'anneau dans un sens de propagation opposé.

5. Aéronef comprenant une pluralité d'équipements (12a-12h), caractérisé entre ce qu'il comprend un réseau (10) optique selon l'une des revendications 1 à 4 pour la transmission de données entre lesdits équipements (12a-12h).

## Patentansprüche

1. Eingebettetes optisches Ringkommunikationsnetzwerk, das angepasst ist, um eine Datenübertragung zwischen Ausrüstungen (12a-12h) zu ermöglichen, umfassend:
- eine Reihe von Abzweiggehäusen (14a-14h), die jeweils einerseits durch multimodale und bidirektionale optische Fasern (16a-16h) derart direkt mit zwei anderen Abzweiggehäusen (14a-14h) verbunden sind, dass sie einen Ring bilden, und die angepasst sind, um andererseits durch multimodale und bidirektionale optische Fasern mit mindestens einem Multiplexer/Demultiplexer (18a, 18b, 18c) verbunden zu sein,
- jede optische Faser (16a-16h) ist angepasst, um die Weiterleitung von optischen Signalen mindestens dreier unterschiedlicher Modi (32, 32, 34) zu ermöglichen,
- jeder Multiplexer/Demultiplexer (18a, 18b, 18c) umfasst eine Vielzahl von passiven optischen Elementen und ermöglicht es, mindestens drei von den Ausrüstungen (12a-12h) stammende Ausrüstungssignale über ein modales Multiplexen in einer optischen Faser zu übertragen, oder die Modi eines von der optischen Faser stammenden optischen Signals zu mindestens drei Ausrüstungssignalen zu trennen,
**dadurch gekennzeichnet, dass**:
- die Abzweiggehäuse (14a-14h) jeweils drei Separatoren (36a, 36b, 36c) umfassen, mit denen die optischen Fasern verbunden sind, und die jeweils zu mindestens einem Prisma (38) gerichtet sind, wobei die Separatoren (36a, 36b, 36c) und das Prisma (38) konfiguriert sind, um ein aus einer optischen Faser stammendes, und in einen Separator eingehendes Signal zu den zwei anderen Separatoren zu richten, und damit jeder Separator die von den zwei anderen Separatoren stammenden Signale empfängt und diese Signale zur optischen Faser sendet, mit der er verbunden ist.

2. Optisches Netzwerk nach Anspruch 1, **dadurch gekennzeichnet, dass** das Prisma (38) ein gerades Prisma ist, das als Basis ein gleichseitiges Dreieck aufweist.

3. Optisches Netzwerk nach einem der Ansprüche 1 oder 2, **dadurch gekennzeichnet, dass** die optischen Multimodefasern (16a-16h) einen Kerndurchmesser von mehr als 50 µm aufweisen.

4. Optisches Netzwerk nach einem der Ansprüche 1 bis 3, **dadurch gekennzeichnet, dass** die Abzweiggehäuse (14a-14h) und die optischen Fasern (16a-16h), die den Ring bilden, in einer selben Ebene angeordnet sind, und dadurch, dass das optische Netzwerk einen Sensor umfasst, der es ermöglicht, die Ausbreitungszeit von zwei optischen Signalen im Ring zu messen, wobei die zwei optischen Signale den Ring in einer entgegengesetzten Ausbreitungsrichtung durchlaufen.

5. Luftfahrzeug, umfassend eine Vielzahl von Ausrüstungen (12a-12h), **dadurch gekennzeichnet, dass** es ein optisches Netzwerk (10) nach einem der Ansprüche 1 bis 4 für die Datenübertragung zwischen den Ausrüstungen (12a-12h) umfasst.

## Claims

1. Embedded optical ring communication network suitable to enable a transmission of data between equipment (12a-12h), comprising:
- an assembly of distribution boxes (14a-14h) each connected, on the one hand, directly to two other distribution boxes (14a-14h) by multimode and bidirectional optical fibers (16a-16h) so as to form a ring, and suitable for being connected, on the other hand, to at least one multiplexer/demultiplexer (18a, 18b, 18c) by multimode and bidirectional optical fibers,
- each optical fiber (16a-16h) is suitable to enable the transport of optical signals of at least three different modes (32, 32, 34),
- each multiplexer/demultiplexer (18a, 18b, 18c) comprises a plurality of passive optical elements and enables to transmit at least three equipment signals coming from the equipment (12a-12h) via a modal multiplexing in an optical fiber or to separate the modes of an optical signal coming from the optical fibers towards at least three equipment signals,
**characterised in that**:
- the distribution boxes (14a-14h) each comprise three separators (36a, 36b, 36c), to which are connected the optical fibers and each directed towards at least a prism (38), said separators (36a, 36b, 36c) and said prism (38) being configured to direct an optical signal coming from an optical fiber and entering into a separator towards the two other separators and so that each separator receives the optical signals coming from the two other separators and sends these signals to the optical fiber to which it is connected.

2. Optical network according to claim 1, **characterised in that** the prism (38) is a straight prism having an equilateral triangle as base.

3. Optical network according to one of claims 1 or 2, **characterised in that** the multimode optical fibers (16a-16h) have a core diameter greater than 50 µm.

4. Optical network according to one of claims 1 to 3, **characterised in that** the distribution boxes (14a-14h) and the optical fibers (16a-16h) forming the ring are arranged in a same plane, and **in that** the optical network comprises a sensor enabling to measure the propagation time of two optical signals in the ring, the two optical signals traveling the ring in an opposite propagation direction.

5. Aircraft comprising a plurality of equipment (12a-12h), **characterised in that** it comprises an optical network (10) according to one of claims 1 to 4, for the transmission of data between said equipment (12a-12h).
